# EUROPÄISCHE PATENTSCHRIFT

(11) **EP 1 322 884 B1**
(45) Veröffentlichungstag und Bekanntmachung des Hinweises auf die Patenterteilung: **15.02.2006**
(21) Anmeldenummer: 01985744.0
(22) Anmeldetag: 13.09.2001
(51) Int. Cl.: F16L 33/02

(54) **SCHLAUCHKLEMME**
HOSE CLAMP
COLLIER DE SERRAGE

(30) Priorität: 26.09.2000 EP 00120930
(43) Veröffentlichungstag der Anmeldung: 02.07.2003
(73) Patentinhaber: Hans Oetiker AG Maschinen- und Apparatefabrik, 8812 Horgen (CH)
(72) Erfinder: OETIKER, Hans, CH-8812 Horgen (CH); MEIER, Ulrich, CH-8820 Wädenswil (CH)
(74) Vertreter: Strehl Schübel-Hopf & Partner
(86) Internationale Anmeldenummer: PCT/EP2001/010598
(87) Internationale Veröffentlichungsnummer: WO 2002/027231

(56) Entgegenhaltungen:
- EP-A- 0 697 554
- EP-A- 1 106 895
- DE-A- 3 818 953

## Beschreibung

Aus US 4,299,012 A ist eine offene Schlauchklemme mit einander überlappenden Bandenden bekannt, von denen der äußere Bandteil, ausgehend vom äußeren Bandende, eine Öffnung, eine ohrartige Formation zum Spannen der Klemme durch Verkürzen der Bandlänge, und einen in Bandlängsrichtung verlaufenden Kanal aufweist, während der innere Bandteil, ausgehend vom inneren Bandende, eine im gespannten Zustand der Klemme in den Kanal eingreifende Zunge, einen den Bereich unter der ohrartigen Formation überbrückenden Bereich, und einen Haken zum Einhängen in die Öffnung aufweist.

Die bekannte Schlauchklemme hat sich wegen der Tatsache, daß ihre Innenfläche im gespannten Zustand keinerlei Lücken oder Stufen aufweist und daher den Schlauch an sämtlichen Stellen des Umfangs abstützt, auch zur Befestigung dünner, harter Schläuche an Rohrnippeln bewährt. Zum Spannen dient die in der Fachwelt als "Oetiker-Ohr" bekannt gewordene Formation, die nach Einhängen eines oder mehrerer auf dem inneren Bandteil vorgesehener Haken in entsprechende, im äußeren Bandteil vorhandene Öffnungen mit Hilfe einer Zange oder eines ähnlichen Werkzeugs verengt wird, um die Schlauchklemme in ihrem Durchmesser zu reduzieren und zwisehen Schlauch und Rohrnippel einen ausreichenden Dichtungsdruck herbeizuführen.

Bei der bekannten Schlauchklemme greift die am inneren Bandende vorhandene Zunge im gespannten Zustand der Schlauchklemme in einen im äußeren Bandteil vorhandenen Zungenkanal ein, der durch Anbringen zweier paralleler, in Bandrichtung verlaufender Schlitze und Herausdrücken des mittleren Abschnitts gebildet ist. Dieser mittlere Abschnitt verschließt den Zungenkanal von außen und verhindert, daß die Zunge über den Umfang des Bandes nach außen tritt.

Ähnliche Gestaltungen sind aus EP 0 697 554 A1, DE 38 18 953 A1 und US 4,711,001 A bekannt. Bei der Klemme nach DE 38 18 953 A1 ist der Zungenkanal lediglich als Vertiefung im äußeren Bandteil gestaltet. Bei der Klemme nach US 4,711,001 A ist der Zungenkanal durch einen von zwei Längsschnitten gebildeten mittleren Teil nach außen hin abgedeckt, der an dem der Zungenspitze entsprechenden Ende aus dem Bandmaterial freigestanzt ist.

Aus US 5,177,836 A und US 5,339,496 A sind offene Schlauchklemmen bekannt, die nahe dem inneren Bandende eine durch einen Schlitz im äußeren Bandteil hindurch nach außen ragende Führungsnase aufweisen. In beiden Fällen liegt der innere Bandteil mit Ausnahme der schmalen Führungsnase an der Innenfläche des äußeren Bandteils an.

US 3,981,049 A offenbart eine weitere offene Schlauchklemme, die zum Eingriff eines Spannwerkzeugs im inneren Bandteil eine leiterartige Anordnung von Öffnungen und am äußeren Bandteil einen Zughaken aufweist. Die Öffnungen sind für das Spannwerkzeug durch einen im äußeren Bandteil vorgesehen Schlitz hindurch zugänglich, der gleichzeitig zur Führung einer am inneren Bandende angeordneten Zunge dient.

Der Erfindung liegt die generelle Aufgabe zugrunde, Nachteile, wie sie bei verwandten Schlauchklemmen nach dem Stand der Technik auftreten, mindestens teilweise zu beseitigen. Eine speziellere Aufgabe der Erfindung kann darin gesehen werden, eine Schlauchklemme anzugeben, die bei geringem Fertigungsaufwand möglichst vielseitig verwendbar ist.

Zur Lösung dieser Aufgabe sieht die Erfindung eine offene Schlauchklemme mit einander überlappenden Bandenden vor, von denen der äußere Bandteil, ausgehend vom äußeren Bandende, eine Öffnung, eine ohrartige Formation zum Spannen der Klemme durch Verkürzen der Bandlänge, und einen in Bandlängsrichtung verlaufenden Kanal aufweist, während der innere Bandteil, ausgehend vom inneren Bandende, eine im gespannten Zustand der Klemme in den Kanal eingreifende Zunge, einen den Bereich unter der ohrartigen Formation überbrückenden Bereich, und einen Haken zum Einhängen in die Öffnung aufweist, wobei der Kanal als offener Durchbruch ausgebildet ist, der breiter ist als die Zunge, und die Zunge einen durch den Durchbruch nach außen ragenden Ansatz aufweist.

Bei der erfindungsgemäßen Schlauchklemme entfällt die beim Stand der Technik zwischen Zunge und Kanal auftretende Reibung, die das Spannen der Schlauchklemme erschwert. Außerdem bleibt die Zunge sowohl im eingehängten als auch im gespannten Zustand der Klemme von außen her zugänglich, so daß der an ihr vorgesehene, nach außen ragende Ansatz zur Handhabung der Klemme und zur Verbesserung ihrer Funktionsweise zur Verfügung steht.

Vorzugsweise hat der Ansatz an der Zunge im wesentlichen die Breite des Durchbruchs. Die sich daraus ergebende Führungsfunktion gewährleistet, daß die Zunge schon vor dem Spannen und insbesondere während des Spannens der Schlauchklemme auf den Zungenkanal ausgerichtet und damit bezüglich der Breite der Schlauchklemme zentrisch gehalten wird.

Der Ansatz kann zwei an beiden Seiten der Zunge in Radialrichtung der Schlauchklemme nach außen gebogene Lappen aufweisen. Diese Gestaltung verleiht dem Ansatz hohe Festigkeit insbesondere in Umfangsrichtung.

Gemäß einer Alternative umfaßt der Ansatz das nach außen gebogene Ende der Zunge. Diese Ausführung ist besonders einfach zu fertigen, wobei sich die Festigkeit dadurch erhöhen läßt, daß der Ansatz eine aus dem Material der Zunge gebildete Falte ist.

In jedem Fall ist es günstig, wenn die vom äußeren Bandende abgewandte Seite des Ansatzes an der Zunge mit der Umfangsrichtung der Schlauchklemme einen Winkel von höchstens 90° bildet, so daß eine sichere Arretierung der Schlauchklemme im eingehängten Zustand maximalen Durchmessers erreicht wird.

In einer Ausgestaltung der Erfindung weist die Zunge eine vom inneren Bandende gesehen nach innen springende Stufe auf, deren Höhe im wesentlichen gleich der Dicke des Bandmaterials ist und die im gespannten Zustand der Schlauchklemme im Bereich des Durchbruchs liegt. Dabei kann der äußere Bandteil nahe dem Durchbruch eine vom äußeren Bandende gesehen nach innen springende Stufe aufweisen, deren Höhe im wesentlichen gleich der Dicke des Bandmaterials ist. Diese Maßnahmen sind zur Erzielung einer über den gesamten Umfang lücken- und stufenfreien Innenfläche der Schlauchklemme im gespannten Zustand von Vorteil.

Die gespannte Schlauchklemme laßt sich in einfacher Weise wieder öffnen, wenn der äußere Bandteil auf der vom äußeren Bandende abgewandten Seite des Durchbruchs eine nach außen ragende Anformung aufweist. Die Anformung und der Ansatz an der Zunge am äußeren Bandteil bilden Eingriffsstellen für ein entsprechendes Werkzeug.

Um ein Abrutschen dieses Werkzeugs zu vermeiden, ist die es von Vorteil, wenn die vom äußeren Bandende abgewandte Seite der Anformung mit der Umfangsrichtung der Schlauchklemme einen Winkel von höchstens 90° bildet. In diesem Fall läßt sich die Schlauchklemme günstigerweise mit dem gleichen zangenartigen Werkzeug öffnen, das zum Schließen des "Oetiker-Ohrs" beim Spannen der Schlauchklemme benutzt wird.

Eine Vereinfachung des Herstellwerkzeugs läßt sich dadurch erreichen, daß die Anformung als Haken ausgebildet ist, der die gleiche Form hat wie der am inneren Bandteil vorgesehene Haken.

In weiterer Ausgestaltung enthält der äußere Bandteil zwischen der Öffnung und dem Ohr einen gewellten Bandbereich, der vorzugsweise mehrere einzelne Wellen umfaßt. Diese Gestaltung ermöglicht es, dieselbe Schlauchklemme für unterschiedliche Durchmesser heranzuziehen. Gleichzeitig wird der elastische Bereich der Schlauchklemme erhöht. Da sich die vorgesehene Wellung im äußeren Bandteil zwischen der Öffnung und dem Ohr befindet, wird sie ebenso wie das Ohr selbst von der vollen Breite des inneren Bandteils überbrückt, so daß die durchgehende geschlossene Innenfläche der Schlauchklemme auch in diesem Bereich erhalten ist.

Bei gegebenem Bandmaterial läßt sich der Elastizitätsmodul dadurch erhöhen oder verringern, daß der gewellte Bandbereich in Bandlängsrichtung mit einem Schlitz bzw. einer Sicke versehen wird.

In einer weiteren Ausgestaltung weist der innere Bandteil in dem in Bandlängsrichtung an die Zunge angrenzenden Bereich zwei Sicken auf, in die im Spannzustand der Schlauchklemme zwei an den Durchbruch angrenzende Sicken im äußeren Bandteil eingreifen, wobei das vom inneren Bandende abgewandte Ende jeder Sicke mit abnehmender Höhe in die Innenfläche des äußeren Bandteils übergeht. Dadurch wird es möglich, die Länge der Zunge und des Überlappungsbereichs zu verkürzen und insgesamt an Bandlänge einzusparen.

Die Erfindung wird nachstehend anhand der Zeichnungen näher erläutert; darin zeigen
- Fig. 1: eine perspektivische Darstellung einer Schlauchklemme im offenen Zustand,
- Fig. 2: einen Teil der gleichen Schlauchklemme im eingehängten, aber noch nicht gespannten Zustand in Seitenansicht,
- Fig. 3: eine der Fig. 2 ähnliche Darstellung der Schlauchklemme im gespannten Zustand,
- Fig. 4: eine der Fig. 3 ähnliche Darstellung der Schlauchklemme beim Wiederöffnen,
- Fig. 5: eine perspektivische Teildarstellung einer Schlauchklemmen gemäß einem Ausführungsbeispiel der Erfindung,
- Fig. 6: bis 8 perspektivische Teildarstellungen weiterer Schlauchklemmen, und
- Fig. 9: und 10 eine perspektivische Teildarstellung bzw. einen Schnitt durch eine weitere Schlauchklemme.

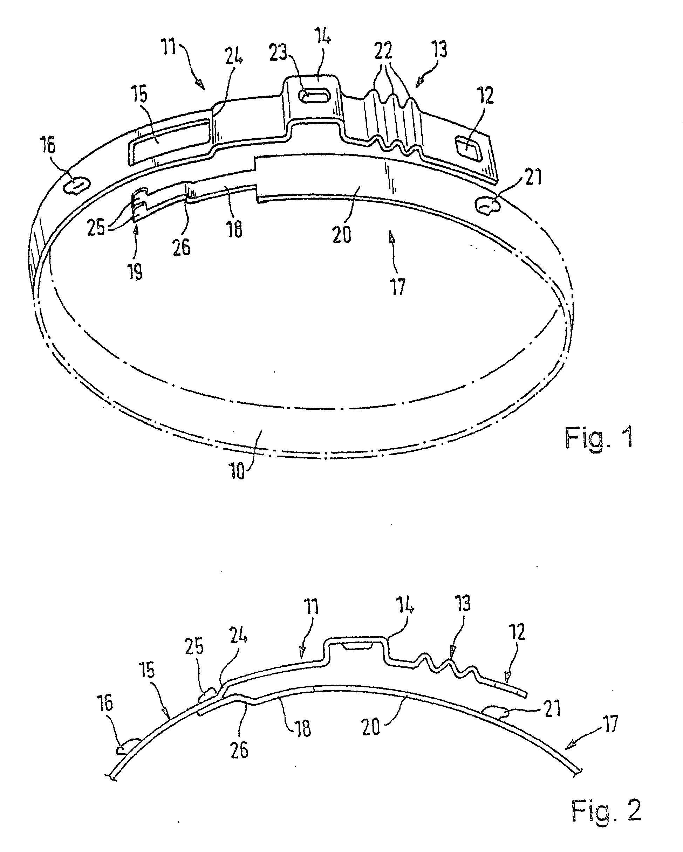

Die Figuren 1 bis 4, 6 und 8 zeigen keine Ausführungsbeispiele der Erfindung, sondern sollen nur deren Verständnis erleichtern.

Die in Fig. 1 gezeigte offene Schlauchklemme ist aus einem Stahlband **10** einer Breite von beispielsweise 10 mm und einer Dicke von beispielsweise 1 mm gefertigt und zu der in Fig. 1 gezeigten Konfiguration vorgebogen. Der äußere Bandteil **11** weist, vom Bandende ausgehend, eine Öffnung **12**, eine Wellung **13,** eine nach außen springende ohrartige Formation (so genanntes "Oetiker-Ohr") **14,** einen in Bandlängsrichtung verlaufenden Durchbruch **15** und einen Haken **16** auf. Der innere Bandteil **17** weist, vom Bandende ausgehend, eine Zunge **18** mit einem an ihrem Ende vorgesehenen Ansatz **19,** einen glatten Bandbereich **20** und einen Haken **21** auf.

Die in das Bandmaterial gestanzte Öffnung **12** ist im wesentlichen quadratisch mit einer Kantenlänge etwa gleich der Hälfte der Bandbreite.

Die Wellung **13** umfaßt bei der dargestellten Schlauchklemme drei nebeneinander liegende, quer zur Bandlängsrichtung verlaufende Wellen **22** mit einem Intervall von etwa 5 mm und einer Wellenhöhe von etwa 3 mm. Je nach Abmessungen und Material der Schlauchklemme und des Schlauchs sowie dem gewünschten Dichtungsdruck können anstelle der gezeigten drei Wellen **22** auch mehr oder weniger Wellen, in der Praxis zwischen einer und neun Wellen, ausreichen bzw. erforderlich sein, um im gespannten Zustand der Klemme bei eine Streckung um typischerweise 30 % genügend Reserve als Toleranzausgleich zu gewährleisten. Eine ungerade Anzahl von Wellen ist aus Fertigungsgründen zweckmäßig.

Das insgesamt etwa umgekehrt U-förmige Ohr **14** hat eine Höhe von etwa 5 mm und eine Länge in Bandlängsrichtung von etwa 10 mm. In den oberen Steg des Ohrs **14** ist eine Verstärkungssicke **23** eingeprägt.

Der Durchbruch **15** liegt symmetrisch zur Bandmittellinie und hat bei der dargestellten Schlauchklemme eine Breite von etwa 5 mm und eine Länge von etwa 10 mm. An dem dem Ohr **14** zugewandten Ende des Durchbruchs **15** ist in das Bandmaterial eine vom äußeren Bandende gesehen nach innen springende Stufe **24** eingeformt, deren Höhe im wesentlichen der Dicke des Bandes **10** entspricht.

Der Haken **16** ist durch Einstanzen eines kurzen, quer zur Bandrichtung verlaufenden und an seinen beiden Enden in Richtung des äußeren Bandendes umgelenkten Schnittes und Herausprägen des vom äußeren Bandende aus gesehen vor diesem Schnitt liegenden Bandmaterials gebildet. Aufgrund dieser Herstellweise hat der Haken **16** eine vom äußeren Bandende aus gesehen gewölbt ansteigende, am Beginn und seitlich mit dem Bandmaterial zusammenhängende Dachfläche, die an ihrer vom äußeren Bandende abgewandten Seite eine Hinterschneidung bildet und somit insgesamt eine Angriffsfläche ergibt, die unter einem Winkel von weniger als 90° zur Umfangsrichtung des Bandes **10** verläuft.

Die am inneren Bandteil **17** vorgesehene Zunge **18** hat eine etwas geringere Breite als der Durchbruch **15.**

Der Ansatz **19** am Zungenende besteht bei der Schlauchklemme nach Fig. 1 aus zwei nach außen gekanteten und in Umfangsrichtung verlaufenden Lappen **25,** deren Höhe demjenigen Maß entspricht, um das die Zunge **18** gegenüber der vollen Breite des Bandes **10** reduziert ist. Wie dargestellt, sind die Lappen **25** am äußersten Zungenende verrundet, während sie an der der Zungenwurzel zugewandten Seite leicht hinterschnitten sind, so daß die an dieser Seite definierte Fläche mit der Bandumfangsrichtung einen Winkel von etwas weniger als 90° bildet.

Etwa in der Mitte ihrer Länge ist in die Zunge **18** eine Stufe **26** eingeformt, die vom inneren Bandende betrachtet nach innen springt und in ihrer Höhe im wesentlichen der Dicke des Bandes **10** entspricht.

Bei der Schlauchklemme nach Fig. 1 hat die Zunge **18** eine Länge von etwa 20 mm, während die in Umfangsrichtung gemessene Länge der Lappen **25** etwa 4 mm beträgt.

Der Haken **21** ist in gleicher Weise wie der Haken **16** durch Kaltverformung (Tiefziehen) gebildet und hat die gleiche Form, weist aber in entgegengesetzte Richtung. Auch bei dem Haken **21** ist die vom inneren Bandende abgewandte Seite hinterschnitten und bildet mit der Umfangsrichtung der Schlauchklemme einen Winkel von weniger als 90°. Anders als bei den Schlauchklemmen nach US 4,299,012 A und US 4,711,001 A dient ein einziger Haken **21** zum Einführen in die Öffnung **12** beim Spannen und Schließen der Klemme sowie zur Aufnahme der Haltekräfte im geschlossenen Zustand. Dadurch wird eine Verkürzung der gesamten Bandlänge mit entsprechender Materialersparnis erreicht.

In dem in Fig. 2 dargestellten eingehängten Zustand greift der Haken **21** in die Öffnung **12** ein, wobei die hinterschnittene Fläche des Hakens **21** an der dem äußeren Bandende zugewandten Kante der Öffnung **12** anliegt. In diesem Zustand greift der von den beiden Lappen **25** gebildete Ansatz **19** der Zunge **18** in den Durchbruch **15** ein.

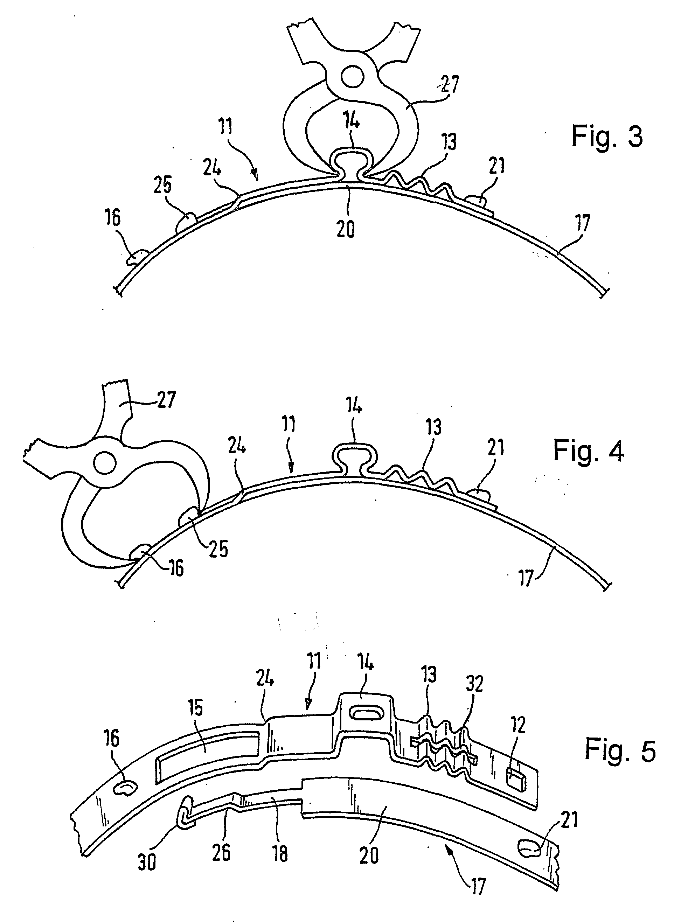

Zum Spannen der Schlauchklemme wird das Ohr **14** mittels der in Fig. 3 angedeuteten Zange **27** verengt, wodurch die Schlauchklemme in ihrem Umfang reduziert wird. Bei diesem Spannvorgang zieht sich die Öffnung **12** mit ihrer dem äußeren Bandende zugewandten Innenkante fest in den Haken **21** hinein, während sich die Zunge **18** durch den Durchbruch **15** mindestens so weit verschiebt, daß sich die in die Zunge **18** eingeformte Stufe **26** über die am Beginn des Durchbruch **15** vorhandene Stufe **24** hinaus verschiebt. Die beiden Stufen **24, 26** bewirken, daß in dem in Fig. 3 gezeigten gespannten Zustand die Innenfläche der Schlauchklemme durchgehend glatt und ohne quer zur Bandrichtung durchgehende Aussparungen, Vertiefungen oder Vorsprünge ist, so daß über den gesamten Umfang ein gleichmäßiger Druck auf den (nicht gezeigten) Schlauch ausgeübt wird.

Der am Ende der Zunge **18** vorhandene Ansatz **19** bewirkt, daß die Zunge **18** bereits in dem in Fig. 2 gezeigten lose eingehängten Zustand und insbesondere beim Spannvorgang in dem Durchbruch **15** gehalten wird. Dadurch wird sichergestellt, daß sich die beiden Bandteile **11, 17** quer zur Bandrichtung nicht gegeneinander verschieben können.

Beim Spannen der Schlauchklemme können die Wellen **22** auseinandergezogen werden. Dieser Effekt hat nicht nur Einfluß auf die Elastizität der Schlauchklemme sondern ergibt auch den Vorteil, daß die gleiche Schlauchklemme ― bei entsprechender Länge des Durchbruchs **15** und der Zunge **18** ― für unterschiedliche Nenndurchmesser verwendbar ist.

Wie in Fig. 4 dargestellt, läßt sich die gespannte Schlauchklemme dadurch öffnen, daß die gleiche Zange **27,** wie sie zum Spannen verwendet wird, mit ihren beiden Backen an dem Ansatz **19** der Zunge **18** und an dem am äußeren Bandteil vorhandenen Haken **16** angesetzt wird. Bei diesem Vorgang wird unter Ausnutzung der Elastizität der Wellung **13** und/oder des Ohrs **14** die Öffnung **12** außer Eingriff mit dem Haken **21** gebracht, so daß sich die Schlauchklemme lösen und entfernen läßt.

Die in Fig. 5 gezeigte Schlauchklemme unterscheidet sich der von nach Fig. 1 bis 4 dadurch, daß der am Ende der Zunge **18** vorgesehene Ansatz **30** aus dem hakenförmig nach außen gebogenen Ende der Zunge **18** besteht. Wie dargestellt, ist dieses hakenförmige Ende zur Versteifung auf sich selbst zurückgefaltet, wobei das Bandmaterial noch ein kurzes Stück parallel zu dem in Umfangsrichtung weisenden Zungenende verläuft. Die dadurch bewirkte Verdickung des Zungenendes wird von einer in der Zunge **18** gebildeten Stufe **26** aufgenommen, so daß sie im gespannten Zustand der Schlauchklemme nicht störend nach innen vorspringt.

Der hakenförmige Ansatz **30** des Ausführungsbeispiels nach Fig. 5 hat die gleiche Funktion wie die beiden Lappen **25** der Schlauchklemme nach Fig. 1 bis 4**.** Er dient einerseits zur Führung der Zunge **18** innerhalb des Durchbruchs **15** und andererseits zum Lösen der gespannten Schlauchklemme mit Hilfe der Zange **27**. Um ein Abrutschen des betreffenden Zangenbackens zu vermeiden, ist der hakenförmige Ansatz **30** so gebogen, daß seine vom inneren Bandende abgewandte Fläche mit der Umfangsrichtung der Schlauchklemme einen Winkel von weniger als 90° bildet.

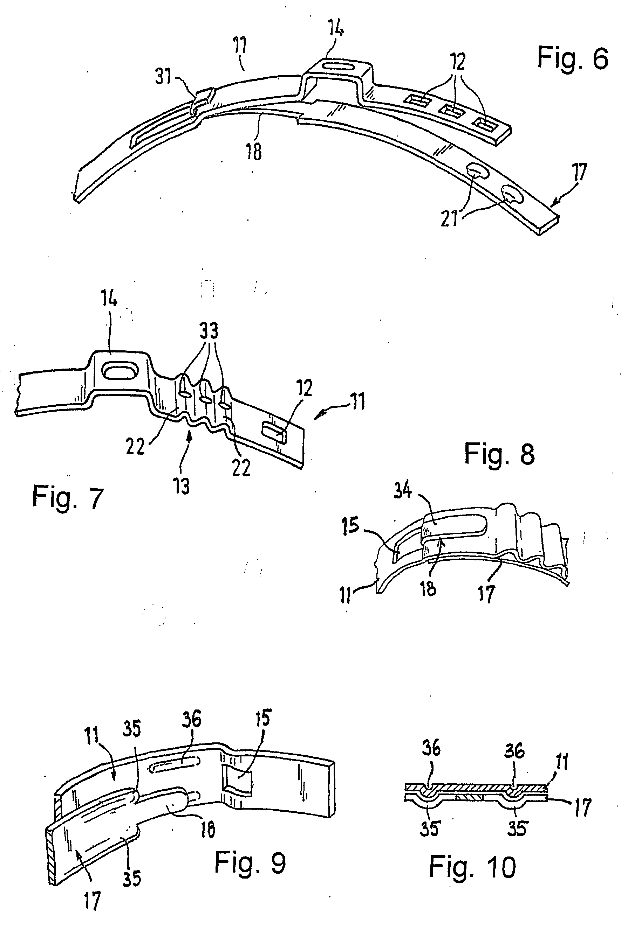

In der weiteren Variante nach Fig. 6 besteht der an der Zunge **18** vorgesehene Ansatz **31** aus dem um im wesentlichen 180° U-förmig zurückgebogenen Ende der Zunge und dient neben einer Führung der Zunge **18** innerhalb des Durchbruchs **15** dazu, sich im eingehängten Zustand der Schlauchklemme an der im Bereich der Stufe **24** gelegenen Kante des Durchbruchs **15** einzuhaken und dadurch den eingehängten Zustand zu sichern.

Die Schlauchklemme nach Fig. 6 unterscheidet sich von der nach Fig. 1 bis 5 auch dadurch, daß der äußere Bandteil **11** nicht eine einzige Öffnung **12,** sondern deren drei, und der innere Bandteil **17** nicht einen einzigen Haken **21,** sondern deren zwei, aufweist. Der Abstand der beiden Haken **21** ist gleich dem Abstand der Öffnungen **12.** Dadurch, daß zwei Haken **21** in zwei der drei Öffnungen **12** eingreifen, erhöht sich die gesamte Haltekraft der Schlauchklemme im gespannten Zustand. Ferner läßt sich aufgrund der Tatsache, daß mehr Öffnungen **12** als Haken **21** vorhanden sind, die Schlauchklemme für unterschiedliche Durchmesser, im gezeigten Fall für zwei verschiedene Durchmesser, verwenden.

Die gleiche Möglichkeit, mehrere Öffnungen **12** und mehrere Haken **21** vorzusehen, besteht auch bei den Schlauchklemmen nach Fig. 1 bis 5.

Ferner ist in Fig. 6 angenommen, daß die Schlauchklemme im Unterschied zu der nach Fig. 1 bis 5 keine Wellung aufweist.

Bei der in Fig. 5 gezeigten Schlauchklemme ist der mit der Wellung **13** versehene Bandbereich mit einem in Umfangsrichtung verlaufenden Schlitz **32** versehen, der die wirksame Breite des Bandes **10** in diesem Bereich verringert und daher die Elastizität der Wellung **13** erhöht.

Der gegenteilige Effekt läßt sich dadurch erreichen, daß die Wellen **22** gemäß Fig. 7 mit Sicken **33** verformt werden, wodurch die gesamte Wellung **13** weniger nachgiebig wird.

Bei einer längeren Zunge, wie sie zur Beherrschung großer Durchmesseränderungen beim Spannen erforderlich ist, kann es vorkommen, daß die durch den Durchbruch hindurchragende Zunge nach außen absteht. Um dies zu verhindern, ist bei der Schlauchklemme nach Fig. 8 der durch den Durchbruch **15** hindurchgeführte Teil **34** der Zunge **18,** der den oben erläuterten Ansatz bildet, um die dem äußeren Bandende zugewandte Kante der Durchbruchs **15** herum zurückgebogen. Dadurch wird gleichzeitig eine zusätzliche Sicherung der geschlossenen und gespannten Schlauchklemme erzielt. In Fig. 8 ist die Schlauchklemme der Einfachheit halber ohne Ohr dargestellt.

Bei dem in Fig. 9 und 10 gezeigten Ausführungsbeispiel sind in dem der Zunge **18** benachbarten inneren Bandteil **17** seitliche, nach innen springende Sicken **35** eingeformt, in die im gespannten Zustand der Klemme ebenfalls nach innen springende Sicken **36** eingreifen, die in den dem Durchbruch **15** benachbarten Bereich des äußeren Bandteils **11** eingeformt sind. Die Sicken **35, 36** führen die Zunge **18** beim Schließen und Spannen der Klemme, so daß die Zunge **18** und der Durchbruch **15** nur etwa halb so lang zu sein brauchen wie bei der Schlauchklemme nach Fig. 1.

Die Sicken **35** gehen an ihren von der Spitze der Zunge **18** abgewandten Enden mit abnehmender Höhe stufenlos in das glatte Innenfläche des inneren Bandteils **17** über, um die Dichtheit beeinträchtigende Stufen zu vermeiden.

Die geringe Länge der Zunge **18** bedeutet, daß die zur Erzeugung einer lücken- und stufenlosen Innenfläche der Schlauchklemme benötigte Bandlänge entsprechend kurz und damit insgesamt an Bandlänge eingespart wird.

In Fig. 9 und 10 der an der Zunge **18** vorhandene Ansatz, der eine der anhand von Fig. 1 bis 6 beschriebenen Formen haben kann, ist aus Gründen der Deutlichkeit nicht gezeigt.

## Patentansprüche

1. Offene Schlauchklemme mit einander überlappenden Bandenden, wobei
der äußere Bandteil **(11),** ausgehend vom äußeren Bandende, eine Öffnung **(12),** eine ohrartige Formation **(14)** zum Spannen der Schlauchklemme durch Verkürzen der Bandlänge, und einen in Bandlängsrichtung verlaufenden Kanal **(15)** aufweist, und
der innere Bandteil (**17**), ausgehend vom inneren Bandende, eine im gespannten Zustand der Schlauchklemme in den Kanal **(15)** eingreifende Zunge **(18),** einen den Bereich unter der ohrartigen Formation **(14)** überbrückenden Bereich **(20),** und einen Haken **(21)** zum Einhängen in die Öffnung **(12)** aufweist,
wobei der Kanal als offener Durchbruch **(15)** ausgebildet ist, der breiter ist als die Zunge **(18),** und die Zunge **(18)** an ihrem Ende einen durch den Durchbruch **(15)** nach außen ragende und auf sich selbst zurückgefalteten hakenförmigen Ansatz **(30)** aufweist.

2. Schlauchklemme nach Anspruch 1, wobei der Ansatz **(30)** an der Zunge **(18)** das nach außen gebogene Ende der Zunge **(18)** umfaßt.

3. Schlauchklemme nach Anspruch 1 oder 2, wobei die vom äußeren Bandende abgewandte Seite des Ansatzes **(30)** an der Zunge **(18)** mit der Umfangsrichtung der Schlauchklemme einen Winkel von höchstens 90° bildet.

4. Schlauchklemme nach einem der vorhergehenden Ansprüche, wobei die Zunge **(18)** eine vom inneren Bandende gesehen nach innen springende Stufe **(26)** aufweist, deren Höhe im wesentlichen gleich der Dicke des Bandmaterials ist und die im gespannten Zustand der Schlauchklemme im Bereich des Durchbruchs **(15)** liegt.

5. Schlauchklemme nach einem der vorhergehenden Ansprüche, wobei der äußere Bandteil **(11)** nahe dem seinem Bandende zugewandten Ende des Durchbruchs **(15)** eine vom äußeren Bandende gesehen nach innen springende Stufe **(24)** aufweist, deren Höhe im wesentlichen gleich der Dicke des Bandmaterials ist.

6. Schlauchklemme nach einem der vorhergehenden Ansprüche, wobei der äußere Bandteil **(11)** auf der vom äußeren Bandende abgewandten Seite des Durchbruchs **(15)** eine nach außen ragende Anformung **(16)** aufweist.

7. Schlauchklemme nach Anspruch 6, wobei die vom äußeren Bandende abgewandte Seite der Anformung **(16)** mit der Umfangsrichtung der Schlauchklemme einen Winkel von höchstens 90° bildet.

8. Schlauchklemme nach Anspruch 6 oder 7, wobei die Anformung als Haken **(16)** ausgebildet ist.

9. Schlauchklemme nach Anspruch 8, wobei der von der Anformung gebildete Haken **(16)** die gleiche Form hat wie der am inneren Bandteil **(17)** vorgesehene Haken **(21).**

10. Schlauchklemme nach einem der vorhergehenden Ansprüche, wobei der äußere Bandteil **(11)** zwischen der Öffnung **(12)** und der ohrartigen Formation **(14)** einen gewellten Bandbereich **(13)** aufweist.

11. Schlauchklemme nach Anspruch 10, wobei der gewellte Bandbereich **(13)** mehrere Wellen **(22)** umfaßt.

12. Schlauchklemme nach Anspruch 10 oder 11, wobei der gewellte Bandbereich **(13)** mit einem in Bandlängsrichtung verlaufenden Schlitz **(32)** oder einer in Bandlängsrichtung verlaufenden Sicke **(33)** versehen ist.

13. Schlauchklemme nach Anspruch 10, wobei der innere Bandteil **(17)** in dem in Bandlängsrichtung an die Zunge **(18)** angrenzenden Bereich zwei Sicken **(35)** aufweist, in die im Spannzustand der Schlauchklemme zwei an den Durchbruch **(15)** angrenzende Sicken **(36)** im äußeren Bandteil **(11)** eingreifen.

14. Schlauchklemme nach Anspruch 13, wobei das vom inneren Bandende abgewandte Ende jeder Sicke **(35)** mit abnehmender Höhe in die Innenfläche des inneren Bandteils (**17**) übergeht.

## Claims

1. An open hose clamp having mutually overlapping band ends, wherein
the outer band part (11) includes, starting from the outer band end, an opening (12), an ear-shaped structure (14) for tightening the hose clamp by shortening the band length, and a channel (15) extending in the longitudinal direction of the band, and
the inner band part (17) includes, starting from the inner band end, a tongue (18) which engages in the channel (15) when the hose clamp is in a tightened condition, an area (20) bridging the area under the ear-shaped structure (14), and a hook (21) for insertion into the opening (12),
wherein the channel is formed as an open aperture (15) which is wider than the tongue (18), and the tongue (18) includes a hook-shaped extension (30) which projects outward through the aperture (15) and is folded back upon itself.

2. The hose clamp of claim 1, wherein the extension (30) on the tongue (18) includes an outward bent end of the tongue (18).

3. The hose clamp of claim 1 or 2, wherein the side of the extension (30) on the tongue (18) remote from the outer band end forms an angle of at most 90° with the circumferential direction of the hose clamp.

4. The hose clamp of any preceding claim, wherein the tongue (18) has a step (26) which protrudes inward, as seen from the inner band end, which has a height substantially equal to the thickness of the band material, and which lies in the area of the aperture (15) when the hose clamp is in the tightened condition.

5. The hose clamp of any preceding claim, wherein the outer band part (11) includes, near the end of the aperture (15) facing the outer band end, a step (24) which protrudes inwards, as seen from the outer band end, and which has a height substantially equal to the thickness of the band material.

6. The hose clamp of any preceding claim, wherein the outer band part (11) includes an outward protruding formation (16) provided on the side of the aperture (15) remote from the outer band end.

7. The hose clamp of claim 6, wherein the side of the formation (16) remote from the outer band end forms an angle of at most 90° with the circumferential direction of the hose clamp.

8. The hose clamp of claim 6 or 7, wherein the formation is formed as a hook (16).

9. The hose clamp of claim 8, wherein the hook (16) formed by the formation has the same shape as the hook (21) provided on the inner band part (17).

10. The hose clamp of any preceding claim, wherein the outer band part (11) has an undulated band area (13) between the opening (12) and the ear-shaped structure (14).

11. The hose clamp of claim 10, wherein the undulated band area (13) includes a plurality of waves (22).

12. The hose clamp of claim 10 or 11, wherein the undulated band area (13) is provided with a slot (32) or bead (33) extending in the longitudinal direction of the band.

13. The hose clamp of claim 10, wherein the inner band part (17) includes, in the area adjoining the tongue (18) in the longitudinal direction of the band, two beads (35) which are engaged, in the tightened condition of the hose clamp, by two beads (36) adjoining the aperture (15) in the outer band part (11).

14. The hose clamp of claim 13, wherein the end of each bead (35) remote from the inner band end merges with a decreasing height into the inner surface of the inner band part (17).

## Revendications

1. Collier de serrage ouvert avec extrémités de bande se recouvrant, dans lequel
la partie de bande extérieure (11), partant de l'extrémité de bande extérieure, présente une ouverture (12), une formation (14) de type oreille pour serrer le collier de serrage en raccourcissant la longueur de la bande, ainsi qu'un canal (15) s'étendant dans la direction longitudinale de la bande, et
la partie de bande intérieure (17), partant de l'extrémité de bande intérieure, comporte une languette (18) s'engageant, à l'état tendu du collier de serrage, dans le canal (15), une zone (20) portant la zone au-dessous de la formation (14) de type oreille, ainsi qu'un crochet (21) destiné à s'accrocher dans l'ouverture (12),
dans lequel le canal est réalisé en tant qu'ajour ouvert (15) qui est plus large que la languette (18), et la languette (18) présente, à son extrémité, un appendice (30) en forme de crochet replié sur lui-même et s'étendant vers l'extérieur à travers l'ajour (15).

2. Collier de serrage selon la revendication 1, dans lequel l'appendice (30) sur la languette (18) comprend l'extrémité de la languette (18) repliée vers l'extérieur.

3. Collier de serrage selon la revendication 1 ou 2, dans lequel le côté, tourné à l'opposé de l'extrémité de bande extérieure, de l'appendice (30) sur la languette (18), forme un angle de 90° au plus avec la direction circonférentielle du collier de serrage.

4. Collier de serrage selon l'une des revendications précédentes, dans lequel la languette (18) présente un gradin (26), en retrait vers l'intérieur, vu depuis l'extrémité intérieure de la bande, dont la hauteur est sensiblement égale à l'épaisseur du matériau de la bande et qui, à l'état tendu du collier de serrage, se situe dans la zone de l'ajour (15).

5. Collier de serrage selon l'une des revendications précédentes, dans lequel la partie de bande extérieure (11) présente, à proximité de l'extrémité de l'ajour (15), tournée vers son extrémité de bande, un gradin (24) en retrait vers l'intérieur, vu depuis l'extrémité de bande extérieure, dont la hauteur est sensiblement égale à l'épaisseur du matériau de la bande.

6. Collier de serrage selon l'une des revendications précédentes, dans lequel la partie de bande extérieure (11) présente, sur le côté de l'ajour (15) tourné à l'opposé de l'extrémité de bande extérieure, un bossage (16) dirigé vers l'extérieur.

7. Collier de serrage selon la revendication 6, dans lequel le côté du bossage, tourné à l'opposé de l'extrémité de bande extérieure, forme un angle de 90° au plus avec la direction circonférentielle du collier de serrage.

8. Collier de serrage selon la revendication 6 ou 7, dans lequel le bossage est réalisé comme crochet (16).

9. Collier de serrage selon la revendication 8, dans lequel le crochet (16), formé par le bossage, présente la même forme que le crochet (21) prévu sur la partie de bande intérieure (17).

10. Collier de serrage selon l'une des revendications précédentes, dans lequel la partie de bande extérieure (11) présente une zone (13) ondulée entre l'ouverture (12) et la formation (14) de type oreille.

11. Collier de serrage selon la revendication 10, dans lequel la zone de bande ondulée (13) comprend plusieurs ondulations (22).

12. Collier de serrage selon la revendication 10 ou 11, dans lequel la zone de bande ondulée (13) est pourvue d'une fente (32) s'étendant dans la direction longitudinale de la bande ou d'une nervure (33) s'étendant dans la direction longitudinale de la bande.

13. Collier de serrage selon la revendication 10, dans lequel la partie de bande intérieure (17) présente, dans la zone adjacente à la languette (18), dans la direction longitudinale de la bande, deux nervures (35) dans lesquelles, à l'état tendu du collier de serrage, s'engagent deux nervures (36), adjacentes à l'ajour (15), dans la partie de bande extérieure (11).

14. Collier de serrage selon la revendication 13, dans lequel l'extrémité, tournée à l'opposé de l'extrémité de bande intérieure, de chaque nervure (35), se prolonge, avec une hauteur décroissante, dans la surface intérieure de la partie de bande intérieure (17).
